# EUROPÄISCHE PATENTSCHRIFT

(11) **EP 1 055 504 B1**
(45) Veröffentlichungstag und Bekanntmachung des Hinweises auf die Patenterteilung: **19.02.2003**
(21) Anmeldenummer: 00106803.0
(22) Anmeldetag: 30.03.2000
(51) Int. Cl.: B29C 47/20, B29C 47/06

(54) **Extruderdüsenkopf**
Extruder die
Filière d'extrusion

(30) Priorität: 25.05.1999 DE 19923973
(43) Veröffentlichungstag der Anmeldung: 29.11.2000
(73) Patentinhaber: Windmöller & Hölscher, D-49525 Lengerich (DE)
(72) Erfinder: Sensen, Klemens, 49525 Lengerich (DE); Linkies, Jürgen, 49536 Lienen (DE); aus dem Moore, Dieter, 48477 Hörstel (DE); Rewwer, Reinmut, 49163 Bohmte (DE); Bosse, Frank, 49545 Tecklenburg (DE)

(56) Entgegenhaltungen:
- EP-A- 0 471 879
- EP-A- 0 626 247
- US-A- 5 690 972
- US-A- 5 738 881
- WORTBERG J: "NEUE WENDELVERTEILERWERKZEUGE. NEW SPIRAL MANDREL DIES" KUNSTSTOFFE,DE,CARL HANSER VERLAG. MUNCHEN, Bd. 88, Nr. 2, 1. Februar 1998 (1998-02-01), Seiten 175-176,178-180, XP000732884 ISSN: 0023-5563

## Beschreibung

Die Erfindung betrifft einen Extruderdüsenkopf, vorzugsweise einen Folienblaskopf, mit einem zentralen ringförmigen Kanal, der mit einer ringförmigen Austrittsdüse versehen ist und in dessen äußerer Begrenzungswand ringförmige, eine Kunststoffschmelze zuführende Ringspalte münden, die die im Durchmesser kleineren Mündungen von kegelstumpfförmigen Kanälen sind, die zwischen den inneren und äußeren Mänteln von aufeinandergestapelten konusförmigen Einsatzteilen gebildet sind.

Aus EP 0 568 544 B1 ist ein Extruderkopf zum Extrudieren von mehrschichtigen Rohren aus thermoplastischem Kunststoff der eingangs angegebenen Art bekannt, dessen zentraler ringförmiger Kanal durch einen zentralen Dom, dessen Mantel die innere Wandung des Kanals bildet, und durch diesen einfassende aufeinandergeschichtete konusförmige Einsatzteile, deren inneren Durchbrüche die Außenwand des zentralen ringförmigen Kanals bilden, begrenzt ist. Bei diesem bekannten Extruderkopf ist jeweils ein kegelstumpfförmiger Kanal zwischen zwei glocken- oder konusförmigen Einsatzteilen gebildet, die mit einer radialen Zuführungsbohrung für die Kunststoffschmelze versehen sind. Für jede zu extrudierende schlauchförmige Kunststoffschicht sind somit jeweils zwei konusförmige Einsatzteile vorgesehen, die stapelförmig aufeinandergeschichtet sind, zwischen sich ringförmige Spalte aufweisen und durch diese miteinander verspannende Deckelteile zusammengehalten sind, die durch Spannschrauben miteinander verbunden sind. Der bekannte Extruderdüsenkopf weist eine erhebliche Baulänge auf, wenn vielschichtige Rohre hergestellt werden sollen. Derart langbauende Extruderdüsenköpfe sind jedoch nachteilig, weil sich aufgrund der großen Höhe des Extruderdüsenkopfes für die Kunststoffschmelze lange Fließwege ergeben, die zu hohen rheologischen Belastungen der Schichtgrenzen der Schmelze führen, die ein instabiles Fließverhalten zur Folge haben können. Die langen Fließwege sind insbesondere für Kunststoffe nachteilig, die eine Erwärmung über eine längere Zeit nicht vertragen. Derartige Kunststoffe können sich bei zu langen Erwärmungszeiten zersetzen und verspröden.

Aus der EP-A-0 471 879 ist ein Extruderdüsenkopf mit kreisplattenförmigen Ringen zu entnehmen, bei welchem in einer Kreisebene Schmelzematerial sowohl von innen nach außen zum zentralen Schmelzekanal als auch von außen nach innen zum zentralen Schmelzekanal fließt.

Aus der Druckschrift Kunststoffe 88 (1998) 2, Carl Hanser Verlag, München, Prof. Dr.-Ing. J. Wortberg, "Neue Wendelverteilerwerkzeuge", Seiten 175 bis 180 ist ein Fünfschicht-Wendelverteiler-Werkzeug mit zylinderförmigen Einsatzteilen für die Schmelzeführung bekannt, wobei die Schmelzekanäle an ihren Enden konusförmig nach innen bzw. nach außen zum Zusammenführen aller Ringkanäle abgewinkelt sind.

In der US-A-5 690 972 ist eine ringförmige Koextrusionsdüse beschrieben, bei welcher die Schmelzeströme über von konusförmigen Einsatzteilen gebildete Ringkanäle von innen nach außen zum Schmelzehauptkanal geführt werden.

Aufgabe der Erfindung ist es daher, einen Extruderdüsenkopf der eingangs angegebenen Art zu schaffen, der die Extrusion von Kunststoffschläuchen mit gleich vielen Schichten gestattet, sich aber durch eine wesentlich niedrigere Bauhöhe auszeichnet.

Erfindungsgemäß wird diese Aufgabe durch den Extruderdüsenkopf gemäß Patentanspruch 1 gelöst.

Zweckmäßige Weiterbildungen der Erfindung sind Gegenstand der abhängigen Ansprüche.

Der erfindungsgemäße Extruderdüsenkopf läßt sich ebenfalls in modularer Bauweise in einfacher Weise dadurch herstellen, daß konusförmige Einsatzteile in einer Anzahl aufeinandergeschichtet werden, die den gewünschten Schichten des extrudierten Schlauches entsprechen. Der erfindungsgemäße Extruderdüsenkopf läßt sich bei gleicher Anzahl von konusförmigen Zuführungskanälen, also gleicher Anzahl von extrudierten schlauchförmigen Schichten mit mindestens der halben Baulänge des bekannten Extruderdüsenkopfs herstellen, weil bezogen auf die axiale Länge der konusförmigen Einsatzteile jeweils zwei eine Kunststoffschmelze zuführende Ringspalte in den zentralen ringförmigen Kanal münden. Die wesentlich verringerte axiale Länge des erfindungsgemäßen Extruderdüsenkopfs führt zu einem verbesserten Fließverhalten der zugeführten Schmelzen und zu einer geringeren Wärmebelastung der Schmelzen, weil diese nur für eine entsprechend geringere Zeit in dem Extruderdüsenkopf verweilen.

Eine weitere Verringerung der Baulänge des erfindungsgemäßen Extruderdüsenkopfs läßt sich dadurch erreichen, daß die inneren und äußeren Mäntel jedes Einsatzteils die kegelstumpfförmigen Kanäle zur Zuführung der Kunststoffschmelzen zu dem zentralen ringförmigen Kanal begrenzen. Durch diese Ausgestaltung wird gegenüber dem bekannten Extruderdüsenkopf die Hälfte der konusförmigen Einsatzteile eingespart, so daß die Baulänge zusätzlich dadurch entsprechend verkürzt wird.

Die in den zentralen ringförmigen Kanal mündenden inneren und äußeren Ringspalte können in gleichen radialen Ebenen liegen. Natürlich wäre auch ein axialer Versatz der Ringspalte möglich.

Diese Ausgestaltung der Kanäle, die zunehmend in axialer Richtung von der Schmelze überströmt werden, ist an sich bekannt.

Ein Ausführungsbeispiel der Erfindung wird nachstehend anhand der Zeichnung näher erläutert. In dieser zeigt
- Fig. 1: einen Querschnitt durch einen Folienblaskopf mit fünf unterschiedliche Schmelzen zuführenden ring- bzw. konusförmigen Kanälen und
- Fig. 2: einen Schnitt durch einen Folienblaskopf mit neun unterschiedlichen Schmelzen zuführenden ring- bzw. konusförmigen Zuführungskanälen.

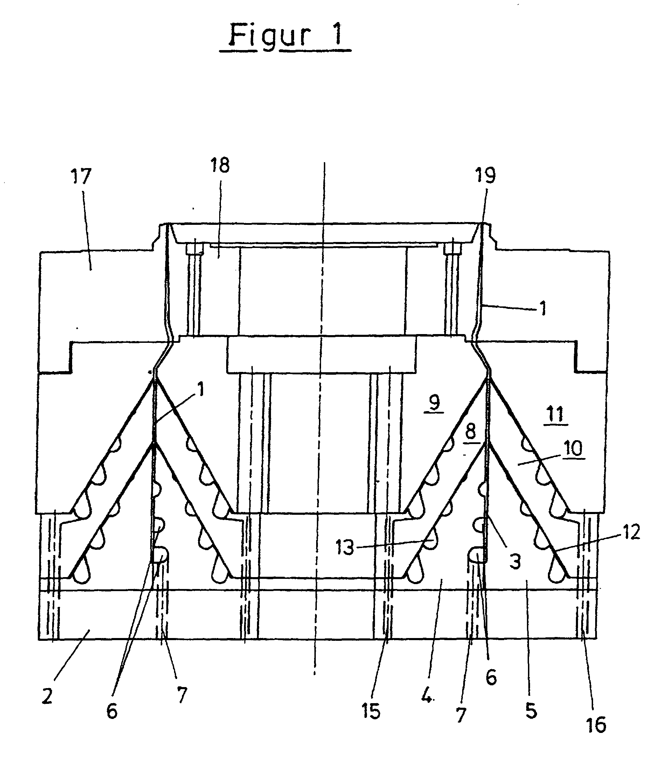

Aus Fig. 1 ist ein Schnitt durch einen Folienblaskopf in schematischer Darstellung ersichtlich, bei dem in einen zentralen ringförmigen Kanal 1 fünf ring- bzw. konusförmige Kanäle münden, die unterschiedliche Kunststoffschmelzen zuführen.

Der Folienblaskopf besteht aus einem unteren ringförmigen Deckel 2, der der Halterung von auf diesen geschichteten konusförmigen Einsatzteilen dient. Ein erster zylinderringförmiger Zuführungskanal 3 ist zwischen den Ringen 4 und 5 gebildet, die einen dreieckigen Querschnitt aufweisen und die mit ihren Basisflächen in nicht näher dargestellter Weise mit dem unteren Deckel 2 verschraubt oder verspannt sind. Der innere Ring 4 weist eine zylindrische Außenwandung und der äußere Ring 5 eine zylindrische Innenwandung auf, die einen Ringspalt begrenzen, der den Zuführungskanal 3 bildet. In den zylindrischen Mantel des inneren Ringes 4 ist eine wendelförmige Nut eingearbeitet, deren Tiefe nach oben hin abnimmt. Diese nutförmigen Wendelgänge sind durch die drei Nuten 6 mit nach oben hin abnehmender Tiefe angedeutet. In den unteren Wendelgang 6 münden eine erste Kunststoffschmelze zuführende Kanäle 7. Auf die unteren in einer gemeinsamen Ebene liegenden Ringe 4, 5 sind weitere konusförmige Ringe 8, 9 und 10, 11 aufgeschichtet. Die konusförmigen Ringe 8, 10 begrenzen mit den Konusflächen der Ringe 4, 5 konusförmige Schmelzezuführungskanäle 12, 13. Diese konusförmigen Schmelzezuführungskanäle münden in den zentralen ringförmigen Kanal 1, der eine Fortsetzung des zylindrischen Ringkanals 3 ist und zwischen den inneren und äußeren zylindrischen Mantelflächen der Ringe 8, 10 gebildet ist In die konusförmigen äußeren Mäntel der Ringe 4, 5 sind wiederum spiralige Nuten eingearbeitet, wobei in die unteren Nuten mit größter Tiefe nicht dargestellte die Schmelze zuführende Kanäle münden.

Auf die konusförmigen Ringe 8, 10 sind die konusförmigen Ringe 9, 11 aufgesetzt, die mit den konischen äußeren Mantelflächen der Ringe 8, 9 konusförmige Schmelzezuführungskanäle begrenzen, die wiederum in den zentralen ringförmigen Kanal münden. Die äußeren Mantelflächen der Ringe 8, 9 sind spiralige Nuten mit nach oben hin abnehmender Nuthöhe eingearbeitet, wobei die unteren Nuten mit größter Tiefe in die Schmelze zuführende Kanäle 15, 16 münden. Auf die oberen konusförmigen Einsätze 9, 11 sind innere und äußere Halteringe 17, 18 aufgesetzt, zwischen denen der zentrale ringförmige Kanal 1 mit ringförmigem Austrittsspalt 19 gebildet ist. Die Ringe 17, 18 können zum einfachen Zusammenbau des Folienblaskopfes mit dem unteren Deckel 2 durch Spannschrauben verbunden sein.

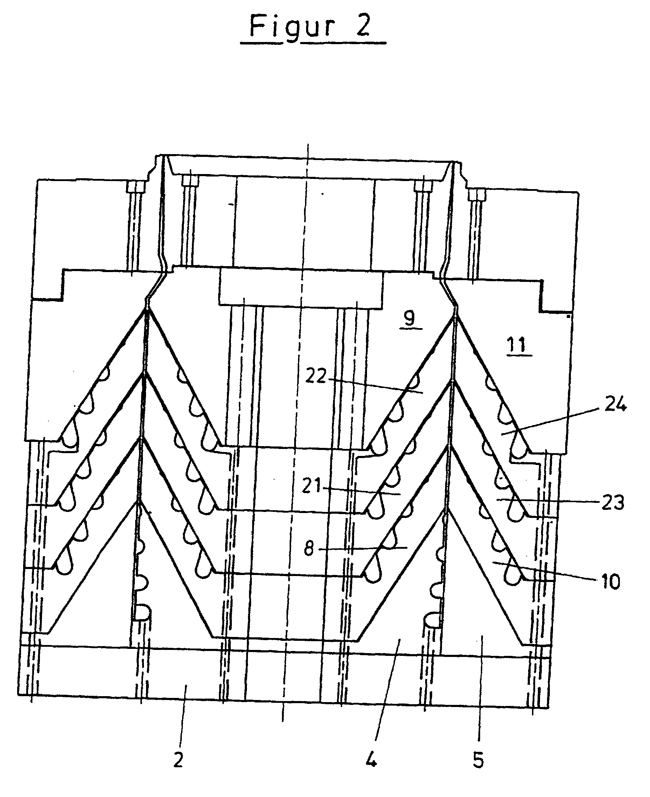

Die inneren Ringe und der untere Deckel 2 weisen fluchtende axiale Durchbrüche auf, die einen Durchgangskanal bilden, in dem die Leitungen zum Zu- und Abführen der Blasluft für den Folienblaskopf untergebracht sind. Der aus Fig. 2 ersichtliche Folienblaskopf weist einen grundsätzlich gleichen Aufbau auf. Er unterscheidet sich von dem aus Fig. 1 ersichtlichen Folienblaskopf im wesentlichen nur dadurch, daß zwischen den inneren und äußeren konusförmigen Ringen 8, 10 und den oberen inneren und äußeren Ringen 9, 11 weitere innere konusförmige Ringe 21, 22 und weitere äußere konusförmige Ringe 23, 24 angeordnet sind, die eine grundsätzlich gleiche Ausgestaltung wie die Ringe 8, 10 besitzen. Durch die Anordnung dieser zusätzlichen konusförmigen Ringe können mit dem Folienblaskopf nach Fig. 2 statt fünf Schmelzen neun unterschiedliche Schmelzen zur Herstellung eines neunschichtigen Kunststoffschlauchs zugeführt werden.

## Patentansprüche

1. Extruderdüsenkopf, vorzugsweise Folienblaskopf, mit einem zentralen ringförmigen Kanal (1), der mit einer ringförmigen Austrittsdüse (19) versehen ist und in dessen äußerer Begrenzungswand ringförmige, eine Kunststoffschmetze zuführende Ringspalte münden, die die im Durchmesser kleineren Mündungen von kegelstumpfförmigen Kanälen (12) sind, die zwischen den inneren und äußeren Mänteln von aufeinander gestapelten konusförmigen Einsatzteilen (5, 10, 11, 23, 24) bebildet sind,
**dadurch gekennzeichnet,**
**dass** auch in die innere Wand des zentralen Ringkanals (1) Kunststoffschmelzen zuführende Ringspalten münden, die die im Durchmesser größeren Mündungen von kegelstumpfförmigen Kanälen (13) sind, die zwischen den inneren und äußeren Mänteln von aufeinander gestapelten konusförmigen Einsatzteilen (4, 8, 9, 21, 22) gebildet sind und dass in die inneren oder äußeren Mäntel der konusförmigen Einsatzteile jeweils zwei gegenläufige spiralige Kanäle (6) mit zur Mündung hin abnehmender Tiefe eingearbeitet sind.

2. Folienblaskopf nach Anspruch 1, **dadurch gekennzeichnet, dass** die inneren und äußeren Mäntel jedes Einsatzteils die kegelstumpfförmigen Kanäle zur Zuführung der Kunststoffschmelzen zu dem zentralen ringförmigen Kanal (1) begrenzen.

3. Folienblaskopf nach Anspruch 1 oder 2, **dadurch gekennzeichnet, dass** die inneren und äußeren Ringspalte in gleichen radialen Ebenen liegen.

## Claims

1. Extruder die, preferably a film blowing die, with a central annular channel (1), which is provided with an annular outlet die (19) and in the outer delimiting wall of which annular slits which feed in a polymer melt open out, said annular slits being the reduced-diameter mouths of frustoconical channels (12) which are formed between the inner and outer casings of conical insert parts (5, 10, 11, 23, 24) stacked one on top of the other,
**characterized**
**in that**, in the inner wall of the central annular channel (1), annular slits which feed in polymer melts also open out, said annular slits being the increased-diameter mouths of frustoconical channels (13) which are formed between the inner and outer casings of conical insert parts (4, 8, 9, 21, 22) stacked one on top of the other, and in that two oppositely running spiral channels (6) with a depth decreasing towards the mouth are respectively machined into the inner or outer casings of the conical insert parts.

2. Film blowing die according to Claim 1, **characterized in that** the inner and outer casings of each insert part delimit the frustoconical channels for feeding in the polymer melts to form the central annular channel (1) .

3. Film blowing die according to Claim 1 or 2, **characterized in that** the inner and outer annular slits lie in the same radial planes.

## Revendications

1. Tête de filière d'extrusion, de préférence tête de soufflage de feuille, avec un canal annulaire central (1) qui est pourvu d'une buse de sortie annulaire (19) et dans la paroi de délimitation extérieure duquel débouchent des fentes annulaires, acheminant un matériau synthétique en fusion, qui sont des embouchures d'un plus petit diamètre de canaux tronconiques (12), qui sont formés entre les enveloppes intérieures et extérieures de pièces d'insertion coniques empilées (5, 10, 23, 24),
**caractérisée en ce que**
débouchent également dans la paroi intérieure du canal annulaire central (1) des fentes annulaires acheminant des fusions de matériau synthétique qui sont les embouchures d'un diamètre plus grand de canaux tronconiques (13) qui sont formés entre les enveloppes intérieures et extérieures de pièces d'insertion coniques empilées (4, 8, 9, 21, 22), et **en ce que** sont ménagés dans les enveloppes intérieures ou extérieures des pièces d'insertion coniques respectivement deux canaux en spirale opposée (6) d'une profondeur diminuant vers l'embouchure.

2. Tête de soufflage de feuille selon la revendication 1, **caractérisée en ce que** les enveloppes intérieures et extérieures de chaque pièce d'insertion délimitent les canaux tronconiques pour l'amenée des fusions de matériau synthétique au canal annulaire central (1).

3. Tête de soufflage de feuille selon la revendication 1 ou 2, **caractérisée en ce que** les fentes annulaires intérieures et extérieures se situent dans les même plans radiaux.
